# EUROPÄISCHE PATENTSCHRIFT

(11) **EP 1 062 501 B1**
(45) Veröffentlichungstag und Bekanntmachung des Hinweises auf die Patenterteilung: **21.04.2004**
(21) Anmeldenummer: 99911731.0
(22) Anmeldetag: 03.03.1999
(51) Int. Cl.: G01N 27/30

(54) **REFERENZELEKTRODE**
REFERENCE ELECTRODE
ELECTRODE DE REFERENCE

(30) Priorität: 10.03.1998 DE 19810098
(43) Veröffentlichungstag der Anmeldung: 27.12.2000
(73) Patentinhaber: Micronas GmbH, 79108 Freiburg (DE)
(72) Erfinder: HERRMANN, Sigrun, D-04736 Waldheim (DE); KADEN, Heiner, D-04736 Waldheim (DE); OELSSNER, Wolfram, D-01037 Dresden (DE); IGEL, Günter, D-79331 Teningen (DE)
(74) Vertreter: Patentanwälte Westphal, Mussgnug & Partner
(86) Internationale Anmeldenummer: PCT/EP1999/001369
(87) Internationale Veröffentlichungsnummer: WO 1999/046586

(56) Entgegenhaltungen:
- EP-A- 0 651 248
- EP-A- 0 767 257
- DE-A- 19 641 777
- GB-A- 2 023 846
- GB-A- 2 078 962
- US-A- 4 404 065
- US-A- 4 536 274
- US-A- 5 368 706
- US-A- 5 702 575

## Beschreibung

Die Erfindung betrifft eine Referenzelektrode für elektrochemische Messungen.

Es ist bekannt, Referenzelektroden in elektrochemischen Meßkreisen als elektrischen Bezugspunkt in einem zu untersuchenden Medium vorzusehen. Referenzelektroden sind reversible, nicht polarisierbare Halbzellen, die ein möglichst konstantes, von den Bestandteilen des zu untersuchenden Mediums weitestgehend unabhängiges Potential ausbilden.

Die primäre Referenzelektrode in der elektrochemischen Meßtechnik ist die Standard-Wasserstoffelektrode, deren Potential definitionsgemäß bei allen Temperaturen gleich Null gesetzt wird. In der Praxis werden jedoch fast ausschließlich Elektroden 2. Art als Referenzelektroden verwendet, da diese einfacher handhabbar sind. Sie bestehen im wesentlichen aus einem Metall, das mit einer Schicht aus einer schwerlöslichen Verbindung dieses Metalls überzogen ist und in eine Lösung taucht, die eine lösliche Verbindung mit dem in der Schicht vorhandenen Anion enthält [F. Oehme: Ionenselektive Elektroden, Dr. Alfred Hüthig Verlag, Heidelberg 1986, S. 67]. Am weitesten verbreitet sind Referenzelektroden vom Typ Ag/AgCl, Cl, und Hg/Hg₂Cl. Die Standardpotentiale dieser Referenzelektroden sind genau bekannt, so daß die damit gemessenen Potentiale leicht auf das Potential der Standard-Wasserstoffelektrode umgerechnet werden können [K. Schwabe Physikalische Chemie. Band 2: Elektrochemie. AkademieVerlag, Berlin 1975, 5. 177]. Da die genannten Referenzelektroden universell einsetzbar sind und hohe Potentialkonstanz aufweisen, haben andere metallische Elektrodenmaterialien in elektrochemischen Referenzelektroden neben den genannten Metallen Silber und Quecksilber nur geringe Bedeutung.

Aus Lambrechts, M. et al., Biosensors: Microelectrochemical Devices, Katholieke Universiteit Leuven, Institut of Physics Publishig, Bristol, Philadelphia and New York (1992), Seite 165 kennt man bereits eine Referenzelektrode der eingangs genannten Art, die auf einem Substrat aus Halbleitermaterial eine Schicht aus metallischem Silber und auf dieser eine Schicht aus Silberchlorid aufweist. Diese Referenzelektrode hat jedoch den Nachteil, daß das Silberchlorid lichtempfindlich ist und unter Lichteinwirkung zu metallischem Silber reduziert werden kann. Um eine Zerstörung der Referenzelektrode durch Lichteinwirkung zu vermeiden, sind deshalb geeignete Schutzmaßnahmen erforderlich. Der vorbekannten Referenzelektrode ist eine Arbeitselektrode aus Gold zugeordnet, die mit der Referenzelektrode zu einem elektrochemischen Meßkreis verbunden wird. Arbeits- und Referenzelektrode sind auf einem gemeinsamen Subs trat angeordnet. Ein Nachteil dieser Elektrodenanordnung besteht jedoch noch darin, daß die Referenz- und die Arbeitselektrode aus unterschiedlichen metallischen Materialien defertigt sind, nämlich aus Silber und Gold, was bei einer Herstellung der Referenzelektrode in Planartechnik die Aufbringung zusätzlicher lithographischen Masken erfordert.

Es besteht deshalb die Aufgabe, eine Referenzelektrode der eingangs genannten Art zu schaffen, bei der die vorstehend genannten Nachteile vermieden werden.

Die Lösung dieser Aufgabe besteht in einer Referenzelektrode gemäß Anspruch 1.

Dem Elektrodenteil kann dann in einem elektrochemischen Meßkreis eine Arbeitselektrode aus Palladium zugeordnet sein, so daß Referenz- und Arbeitselektrode aus dem gleichen metallischen Ausgangsmaterial gefertigt werden können. So kann beispielsweise das Elektrodenteil der Referenzelektrode ein Palladiumdraht sein, der mit einer in wäßrigen Medien schwerlöslichen Verbindung des Palladiums gemäß Anspruch 1, beschichtet ist und in ein wäßriges oder gelförmiges Medium taucht, das Anionen der Palladiumverbindung enthält. Als Arbeitselektrode kann dann ein unbeschichteter Palladiumdraht vorgesehen sein. Vorteilhaft ist außerdem, daß die erfindungsgemäße Referenzelektrode weitestgehend lichtunempfindlich ist. Eine lichtundurchlässige Abschirmung der Referenzelektrode kann dadurch entfallen.

Der Einsatz von Palladium als Sensormaterial ist zwar für einen gattungsfremden wasserstoffsensitiven Gassensor aus Lundström, I., et al., Hydrogensensitive MOS field effect transistor, Appl. Phys. Lett. 26 (1975), S. 55-67, bereits bekannt. Wenn bei einem MOS-Feldeffekttransistor das Metall auf dem Gateisolator SiO durch eine dünne Schicht (< 100 nm) Palladium ersetzt wird, so diffundieren Wasserstoffatome aus der Umgebung durch diese Schicht zur Phasengrenze Pd/SiO , wodurch sich die Austrittsarbeit in der Palladiumschicht verändert und eine meßbare Verschiebung in der Schwellspannung des Feldeffektransistors auftritt. Der vorbekannte wasserstoffsensitive Gassensor weist jedoch einen ganz anderen Aufbau als die erfindungsgemäße Referenzelektrode auf und dient nicht der Gewinnung eines Referenzpotentials.

Es wurde auch bereits versucht, unter Verwendung von Palladium Betriebs-Wasserstoffelektroden als Elektroden erster Art für die pH-Messung in flußsäurehaltigen Beizbäderm herzustellen, die darauf beruhen, daß Palladium Wasserstoff in größerer Menge aufnehmen kann, Jasinski, R., A Palladium Hydride pH Electrode for Use in Buffered Fluoride Etoh Solutions, J. Electrochem. Soc. 121 (1974), S. 1579-1584. Die Standzeiten derartiger Elektroden sind jedoch gering. Daher haben sie bis heute keine technische Bedeutung erlangt, Galster, H., pH-Messung, VCH Verlagsgesellschaft, Weinheim (1990), S. 69; Shao, M. et al., pH measurements based on a palladium electrode, Electroanalysis 6 (1994), S. 245-249.

Das System Palladium/Wasserstoff wird auch in US 4 404 065 als Referenzsystem in miniaturisierbarer Ausführung angegeben, z.B. für coulometrische Sensoren in Fließverfahren oder für amperometrische Sensoren in Dünnschichtausführung. Trotz des Vorteils, daß dieses Referenzsystem bis zu hohen Drücken (> 4 Mpa) verwendbar ist, wird seine Anwendbarkeit dadurch wesentlich eingeschränkt, daß eine ausgeprägte pH-Sensitivität auftritt.

Aus GB-A-2 023 846 ist auch bereits eine Referenzelektrode mit einem Elektrodenteil aus metallischem Palladium bekannt, das von einer Schicht aus Palladiumoxid überdeckt ist, die mit dem Bezugselektrolyt in Kontakt steht. Auch diese Referenzelektrode weist eine ausgeprägte Abhängigkeit ihres Elektrodenpotentials vom pH-Wert des Bezugselektrolyten auf.

Aus US-A-4 536 274 ist auch bereits ein Sensor zur transkutanen Messung des CO₂-Gehalts im Blut beschrieben. Der Sensor weist eine Meßelektrode mit einen Elektrodenteil aus metallischem Palladium auf, das von einer Schicht aus Palladiumoxid überdeckt ist. Mittels der Meßelektrcde wird der CO₂-Gehalt indirekt durch Messung des pH-Wertes ermittelt. Dabei ist der Meßelektrode eine Silber/Silberchlorid-Elektrode als Referenzelektrode zugeordnet. Das elektrische Potential an der Palladium/Palladiumoxid-Elektrode ändert sich in Abhängigkeit vom pH-Wert des mit der Elektrode in Kontakt stehenden Elektrolyten, während das Potentail der Referenzelektrode unabhängig vom pH-Wert konstant bleibt.

Bei einer besonders vorteilhaften Ausgestaltung der Erfindung ist das Palladium-Elektrodenteil als Schicht ausgebildet, die auf einem Substrat aus einem Halbleitermaterial angeordnet ist, wobei das Elektrodenteil insbesondere in einem halbleitertechnologischen Fertigungsprozeß auf das Substrat aufgebracht ist. Die Referenzelektrode kann dann besonders kleine Abmessungen aufweisen. Darüber hinaus können mittels des halbleitertechnologischen Fertigungsprozesses bei der Herstellung der Referenzelektrode auch noch zusätzliche Strukturen in das Substrat ein- oder auf dieses aufgebracht werden, beispielsweise Strukturen für eine Auswerteeinrichtung zur Verarbeitung eines Meßsignales, eine Arbeitselektrode, ein Sensor und/oder dergleichen Komponenten. Dabei kann eine zur Herstellung des Palladium-Elektrodenteils auf das Substrat oder die darauf befindliche(n) Schicht(en) aufgebrachte Metallisierung gleichzeitig auch zur Ausbildung einer Palladium-Struktur für eine zusätzliche Komponente genutzt werden. Auch die das schwerlösliche Palladiumsalz enthaltende Schicht gemäß Anspruch 1 läßt sich sehr effektiv und kostengünstig aufbringen, da sich auf einem Wafer eine große Anzahl von Elektrodenstrukturen befinden können, die in einem Fertigungsschritt gleichzeitig präpariert werden können.

Das Palladium-Elektrodenteil kann besonders vorteilhaft mittels des aus DE 196 41 777 A1 bekannten Verfahrens aufgebracht werden. Dabei wird auf dem Substrat eine Struktur für das Palladium-Elektrodenteil erzeugt, die aus einem Material mit vorbestimmten Hafteigenschaften für metallisches Palladium besteht, und danach wird eine Palladium-Metallisierung der Oberfläche der die Struktur aufweisenden Anordnung vorgenommen, bei der die Palladium-Metallisierung nur auf der Struktur für das Palladium-Elektrodenteil haften bleibt. Auf diese Weise kann das Palladium-Elektrodenteil ohne die Verwendung einer zusätzl i-chen photolithografischen Lackmaske auf das Substrat bzw. die darauf befindliche Struktur aufgebracht werden. Dadurch ist es insbesondere möglich, die für die Herstellung der Referenzelektrode erforderlichen Verfahrensschritte in einen CMOS-Prozeß einzubinden.

Bei einer anderen Ausführungsform der Erfindung ist das Palladium-Elektrodenteil als Schicht ausgebildet, die auf einem Substrat aus Keramik, Glas, Glaskeramik, Leiterplattenmaterial, Polymerwerkstoff oder dergleichen dielektrischem Material besteht und die insbesondere mittels Dickschichttechnik auf das Substrat aufgebracht ist. Die Referenzelektrode ist dann besonders kostengünstig herstellbar, beispielsweise mittels Sieb- oder Schablonendrucks.

Vorteilhaft ist, wenn das Elektrodenteil metallisches Palladium enthält, das in feinvertellter Form in ein Bindemittel aus Polymermaterial oder Cermet eingebettet ist. Bei der Herstellung der Referenzelektrode kann das Palladium in einem pastösen oder flüssigen Medium beispielsweise mittels Siebdruck oder Schablonendruck auf das Substrat aufgebracht werden. Das Medium kann dann anschließend ausgehärtet, getrocknet oder verfestigt werden.

Die schwerlösliche Palladiumverbindung enthält Palladiumjodid, Palladiumbromid und/oder Palladiumacetat. Die Palladiumverbindung ist dann mittels elektrochemischer Verfahren einfach und kostengünstig herstellbar. Dabei ist es sogar möglich, daß diese schwerlösliche Schicht elektrolytisch und/oder durch einen chemischen Ausfällungsprozeß in situ auf dem Palladium-Elektrodenteil abgeschieden oder erzeugt ist.

Bei einer vorteilhaften Ausführungsform der Erfindung sind die Anionender schwerlöslichen Palladiumverbindung gemäß Anspruch 1 in einer ionogenen Lösung und/oder einem verfestigten Gel enthalten. Dabei können die ionenhaltige Lösung und/oder das verfestigte Gel gegebenenfalls zwischen einer ionendurchlässigen Membran und der metallischen Palladium-Schicht eingeschlossen sein.

Bei einer zweckmäßigen Ausgestaltung der Erfindung ist die Referenzelektrode auf einem Halbleiterchip oder in einem hybrid aufgebauten Mikrosystem integriert. Das Mikrosystem kann beispielsweise einen Träger aufweisen, auf dem die Referenzelektrode und weitere Komponenten, wie z.B. eine Auswerteeinrichtung und/oder eine ionenselektive Arbeitselektrode, angeordnet sein können. Dabei können die einzelnen Komponenten mittels an sich bekannter mikrotechnologischer Verfahren auf dem Träger montiert sein. Insgesamt ergibt sich dadurch eine kompakt aufgebaute Meßeinrichtung.

Das Elektrodenteil und/oder die die in wäßrigen Medien schwerlösliche Palladiumverbindung aufweisende Schicht gemäß Anspruch 1 können ring- oder scheibenförmig ausgebildet sein oder eine rechteckige Gestalt aufweisen. Die Anwendung der Erfindung ist nicht auf eine planare Referenzelektrode beschränkt. In vorteilhafter Weise kann auch eine zylindrische Referenzelektrode geschaffen werden, indem ein Palladiumdraht, der mit einer in wäßrigen Medien schwerlöslichen Verbindung des Palladiums gemäß Anspruch 1 beschichtet ist in ein wäßriges oder gelförmiges Medium taucht, das Anionen der Palladiumverbindung enthält.

Besonders vorteilhaft ist, wenn die Referenzelektrode ein Teil eines elektrochemischen Meßsystems mit wenigstens einer auf dem Substrat befindlichen, insbesondere aus Palladium bestehenden Arbeitselektrode und/oder einem ionensensitiven Feldeffekttransistor ist, und daß die Arbeitselektrode und/oder oder der Feldeffekttransistor vorzugsweise an der dem Palladium-Elektrodenteil abgewandten Vorderseite des Substrats angeordnet ist. Dadurch ergibt sich eine besonders kompakt aufgebaute elektrochemische Meßeinrichtung, bei der die Referenz- und die Arbeitselektrode und/oder der Feldeffekttransistor auf demselben Substrat angeordnet sind. Da die Arbeitselektrode ebenso wie das Elektrodenteil aus Palladium bestehen kann, können die Arbeitselektrode und das Elektrodenteil in einem Arbeitsgang auf das Substrat und/oder die darauf befindlichen Schichten aufgebracht werden. Das elektrochemische Bezugssystems ist dann besonders kostengünstig herstellbar.

Zweckmäßigerweise ist auf dem Substrat wenigstens ein Temperatursensor angeordnet. Ein eventuell vorhandener Einfluß der Umgebungstemperatur und oder der Temperatur des zu untersuchenden Mediums auf das Bezugspotential der Referenzelektrode kann dann kompensiert oder in anderer Weise berücksichtigt werden.

Das erfindungsgemäße Bezugssystem ist bevorzugt als Referenzelektrode in einem amperometr ischen Sensor eingesetzt. Für den Einsatz als Referenzelektrode in einem potentiometrischen Meßkreis kann der die Anionen der Palladiumverbindung gemäß Anspruch 1 in gelöster Form enthaltende Bezugselektrolyt mit einer nur an einer Stelle perforierten Membran oder Deckschicht überzogen sein, die nur an einer Stelle perforiert ist und eben diese Stelle mit einem für elektrochemische Messungen üblichen Diaphragma, zum Beispiel mittels einer porösen Membran oder einer Kationenaustauschermembran, geschlossen, jedoch für eine elektrolytische Verbindung durchgängig ist. Dabei ist die Membran vorzugsweise chemisch inert, elektrisch isolierend und/oder flüssigkeitsdicht ausgebildet.

Weitere vorteilhafte Ausführungsformen der Erfindung sind in den Unteransprüchen beschrieben.

Nachfolgend sind Ausführungsbeispiele der Erfindung anhand der Zeichnung näher erläutert. Es zeigen:
- Fig. 1: einen Querschnitt durch eine Referenzelektrode für amperometrische Messungen,
- Fig. 2: einen Querschnitt durch eine Referenzelektrode für potentiometrische Messungen,
- Fig. 3: einen Querschnitt durch die in Figur 5 dargestellte Referenzelektrode für amperometrische Messungen entlang der in Figur 5 mit I bezeichneten Querschnittsebene,
- Fig. 4: eine Darstellung ähnlich Figur 2, wobei jedoch die Referenzelektrode in einen Halbleiterchip integriert ist und
- Fig. 5: eine Aufsicht auf eine Referenzelektrode für amperometrische Messungen, wobei die Referenzelektrode in einen Halbleiterchip integriert ist und wobei der Bezugselektrolyt und die Deckschicht transparent dargestellt sind.

Eine im ganzen mit 1 bezeichnete Referenzelektrode für elektrochemische Messungen weist ein Substrat 2 aus einem Halbleitermaterial oder einem dielektrischen Material auf. Auf dem Substrat 2 ist ein Palladium-Elektrodenteil 3 angeordnet, das durch eine dünne Schicht aus metallischem Palladium gebildet ist. Das Palladium-Elektrodenteil 3 ist von einer Schicht 4 überdeckt, die aus einer in wäßrigen Medien schwerlöslichen Palladiumverbindung gemäß Anspruch 1 besteht. An der dem Palladium-Elektrodenteil 3 abgewandten Seite der gemäß Anspruch 1 schwerlöslichen Schicht 4 befindet sich benachbart zu der schwerlöslichen Schicht 4 ein Bezugselektrolyt 5, der Anionen der Palladiumverbindung der Schicht 4 in gelöster Form enthält. An der der schwerlöslichen Schicht 4 abgewandten Seite des Bezugselektrolyts 5 grenzt ein zu untersuchender Analyt 6 an den Bezugselektrolyten 5 an.

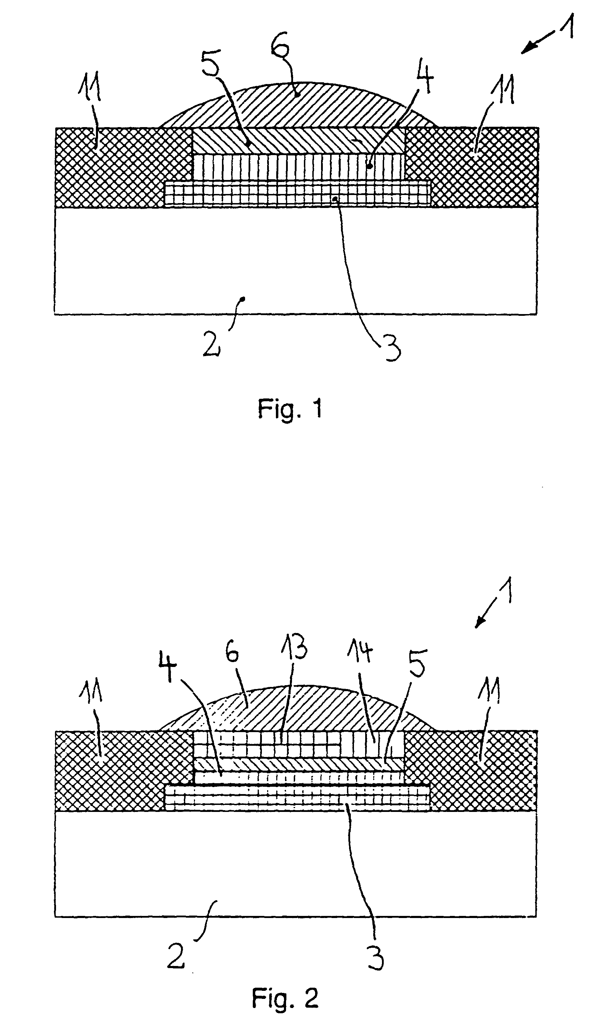

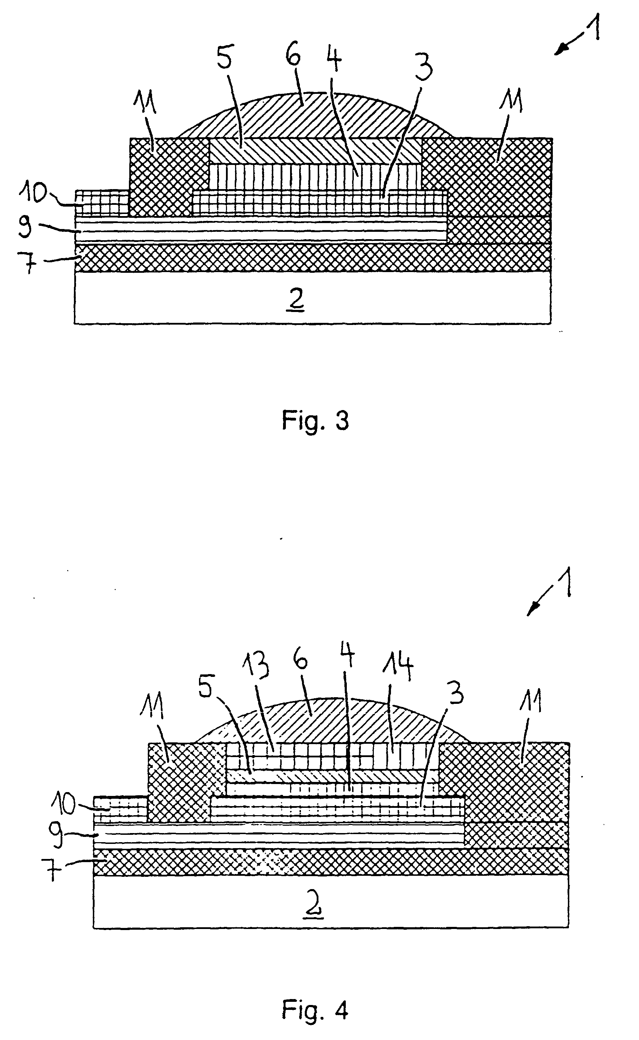

Bei dem Ausführungsbeispiel gemäß Figur 3 und 4 ist das Substrat 1 ein Silizium-Halbleiterchip, an dessen Oberfläche eine Passivierungsschicht 7 angeordnet ist, die beispielsweise eine Siliziumdioxid-Schicht oder eine mittels CVD (chemical vapour deposition) aufgebrachte Siliziumnitrid-Schicht aufweisen kann. Der Halbleiterchip weist außerdem Leitbahnen 9 auf, die beispielsweise aus Poly-Silizium in Dünnfilmtechnik präpariert sein können. Das Palladium-Elektrodenteil 3 ist ebenfalls mittels Dünnfilmtechnik an der vorgesehenen Stelle auf eine Poly-Silizium-Leitbahn 9 aufgebracht. Die Form und Größe des Palladium-Elektrodenteils 3 ist in weiten Grenzen wählbar. Bei den Ausführungsbeispielen nach Fig. 1 und 2 hat das Palladium-Elektrodenteil 3 die Gestalt eines Kreisringsegments mit einer Fläche von 0,16 mm². Die Poly-Silizium-Leitbahn 9 stellt die elektrische Verbindung des Palladium-Elektrodenteils 3 zu eine mit Palladium beschichteten Bondstelle 10 her, die eine Kontaktierung nach außen ermöglicht.

Das Palladium-Elektrodenteil 3 ist seitlich von einer Isolationsschicht 11 umgrenzt, welche das Palladium-Elektrodenteil 3 zumindest bereichsweise überdeckt. Die Isolationsschicht 11 weist eine Unterbrechung oder Aussparung auf, die eine definierte Fläche das Palladium-Elektrodenteils 3 freilegt. Die Isolationsschicht 11 kann beispielsweise eine strukturiert aufgetragene CVD-Oxidschicht sein. Diese bildet bei der Herstellung der Referenzelektrode 1 den Träger für den weiteren Aufbau der Referenzelektrode 1.

Zur Komplettierung der Referenzelektrode 1 zweiter Art befindet sich auf dem Palladium-Elektrodenteil 3 eine in einem wäßrigen Medium weitgehend unlösliche Schicht 4 aus Palladiumjodid PdJ₂, die beispielsweise durch elektrochemische Jodierung in 0,1 M KJ-Lösung bei einem Potential von 700 mV gegen eine gesättigte Ag/AgCl-Elektrode erzeugt werden kann. Um die Haftung dieser elektrolytisch erzeugten Schicht 4 zu verbessern, ist auf der Palladium-Schicht 3 eine Zwischenschicht von fein verteiltem Palladium angeordnet. Bei der Herstellung der Referenzelektrode 1 kann die Zwischenschicht beispielsweise aus einem schwach sauren (pH = 5,6 ... 6,5) Palladiumbad unter Verwendung einer Palladium-Anode bei der Stromdichte 40 µA/mm⁻ und Raumtemperatur über eine Zeit von etwa 5 Minuten galvanisch abgeschieden werden. Das Palladiumbad kann beispielsweise 5 bis 10 g/l Palladiumchlorid, 15 bis 20 g/l Natriumnitrit, 40 bis 50 g/l Natriumchlorid und 25 bis 30 g/l Borsäure enthalten.

Die so erzeugte PdJ₂-Schicht 4 ist mit dem die Anionen der in der Schicht 4 enthaltenen Palladiumverbindung aufweisenden Bezugselektrolyt 5 bedeckt. Der Bezugselektrolyt 5 kann beispielsweise eine Lösung sein, die 0,1 M Jodwasserstoffsäure HJ enthält.

In einer Variation kann der Bezugselektrolyt 5 entsprechend Figur 1 und 3 auch ein Hydrogel, gebildet aus 2 g HEMA, 60 mg Tetraethylenglycolmethacrylat, 80 mg Dimethoxyphenylacetophenon, 12 mg Poly-N-vinylpyrrolidon, sein, das durch UV-Strahlung vernetzt ist. In das Hydrogel ist ein Elektrolyt eingebracht, der beispielsweise aus einem Gemisch von Wasser und Ethylenglycol im Verhältnis 1:9 bestehen kann, das Natriumhydrogencarbonat, Natriumcarbonat und Kaliumjodid jeweils in der Konzentration 0,1 mo/l enthält.

Durch den Kontakt der PdJ₂-Schicht 4 mit dem durch die Lösung bzw. das Gel gebildeten Elektrolyten 5 bildet sich ein konstantes Potential, das Bezugspotential, aus. Dieses Bezugspotential ist von der Konzentration des Anions (z.B. Jodid) der Palladiumverbindung im Bezugselektrolyten 5 oder Gel abhängig.

Die die schwerlösliche Palladiumverbindung gemäß Anspruch 1 aufweisende Schicht 4 kann bei den in der Zeichnung gezeigten Ausführungsbeispielen auf der Oberfläche des Palladium-Elektrodenteils 3 auch stromlos aus einer alkoholischen Jod-Lösung, die 1 g Jod in 10 ml Ethanol enthält, bei 50 °C chemisch abgeschieden werden. In einer Modifikation ist die Schicht 4 ebenfalls chemisch, hierbei jedoch aus einer wäßrigen Lösung von Palladiumchlorid PdCl₂ und Jodwasserstoffsäure Hg auf dem Palladium-Elektrodenteil 3 abgeschieden.

Bei den Ausführungsbeispielen nach Figur 1 und 2 ist die erfindungsgemäße Referenzelektrode 1 in Dickfilmtechnik ausgeführt. Das nichtleitende Substrat 2 ist ein handelsübliches glasfäserverstärktes Epoxidharzhartgewebe oder eine Keramikplatte. Auf dem Substral 2 befindet sich eine im Siebdruckverfahren aufgebrachte und ausgehärtete Palladium-gefüllte Epoxidharzpaste; diese bildet das Elektrodenteil 3 gemäß Figur 3 und 4. Die zur Verkapselung dienende Isolationsschicht 11 besteht aus einer im Siebdruckverfahren aufgetragenen polymeren Isolationspaste. Durch sie wird auch die ringförmige Struktur des Bezugssystems gebildet. Die Schicht 4 mit der schwerlöslichen Palladium-Verbindung gemäß Anspruch 1 ist gemäß dem Ausführungsbeispiel nach Figur 3 und 4 elektrolytisch abgeschieden oder im Dickschichtprozeß als mit Palladiumjodid gefüllte Dickschichtpaste aufgetragen. Der Bezugselektrolyt 5 entspricht demjenigen des Ausührungsbeispiels gemäß Figur 3 und 4.

Eine vorteilhafte Anwendung des erfindungsgemäßen Bezugssystems als Referenzelektrode für amperometrische Messungen ist in Fig. 1 und 3 gezeigt. Dabei befindet sich die Referenzelektrode, bestehend aus Substrat 2, dem Palladium-Elektrodenteil 3, der Schicht 4 aus der unlöslichen Palladium-Verbindung und dem Bezugselektrolyten 5, der beispielsweise ein Gel sein kann, in Kontakt mit dem zu untersuchenden Analyten 6. Die Isolationsschicht 11 dichtet das Palladium-Elektrodenteil 3, die Schicht 4 und den Bezugselektrolyten 5 derart zu dem Analyten 6 hin ab, daß nur eine begrenzte Flache des Bezugselektrolyten 5 in offener Verbindung mit dem Analyten 6 steht. Bei amperometrischen Messungen befindet sich in dem Analyten 6 außer der erfindungsgemäßen Referenzelektrode 1 mindestens noch eine weitere Elektrode, nämlich eine Meß- oder Arbeitselektrode 12, die mit der Referenzelektrode 1 zu einem Meßkreis verschaltet ist. Die Referenzelektrode 1 kann in diesem Meßkreis sowohl als Bezugselektrode als auch als Gegenelektrode fungieren.

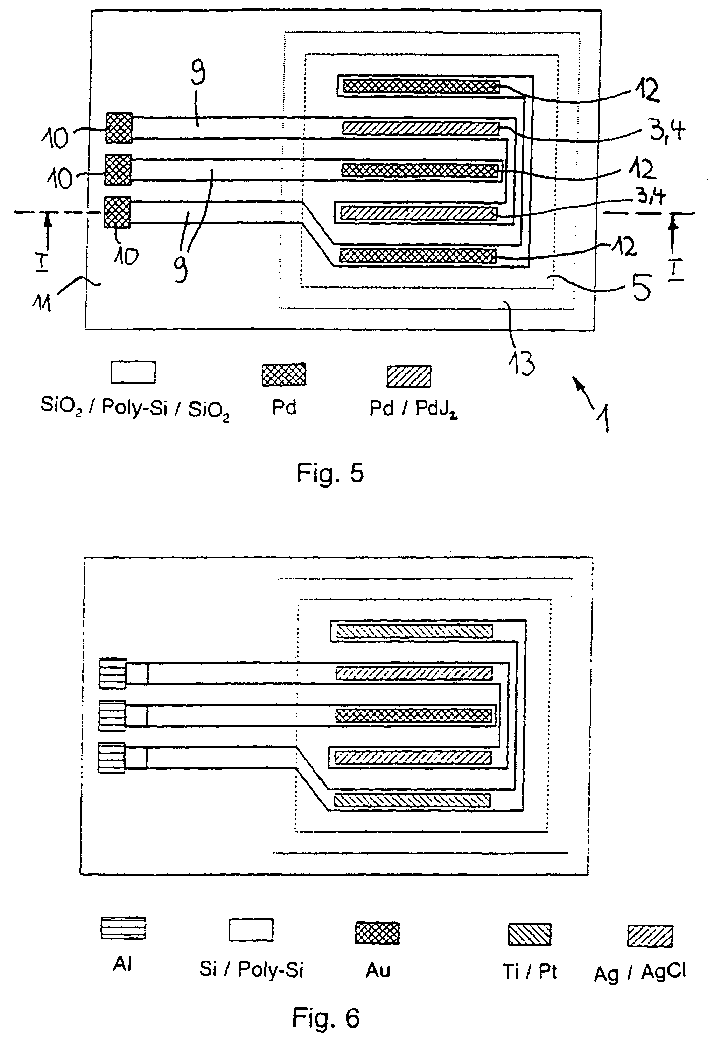

Figur 5 zeigt ein Ausführungsbeispiel, bei dem mehrere Arbeitselektroden 12 zusammen mit zwei Referenzelektroden 1 auf einem gemeinsamen Substrat angeordnet sind. In vorteilhafter Weise können die Arbeitselektroden 12 und/oder die Bondstellen 10 ebenfalls aus Palladium bestehen, so daß die gesamte in Figur 5 gezeigte Meßanordnung mit Verfahren der Halbleitertechnik auf einfache Weise mit nur wenigen, in der Halbleitertechnik bevorzugt verwendeten Stoffen hergestellt werden kann. Bei der Herstellung der Meßanordnung in Planartechnik müssen deshalb nur vergleichsweise wenige Masken auf das Substrat bzw. die darauf bereits befindlichen Strukturen oder Schichten aufgebracht werden.

Zum Vergleich ist in Figur 6 eine aus dem Stand der Technik bekannte Meßanordnung gezeigt. Deutlich ist erkennbar, daß diese Meßanordnung wesentlich mehr Stoffe aufweist als diejenige nach Figur 5. Die Herstellung der vorbekannten Meßanordnung ist deshalb vergleichsweise kompliziert und teuer.

Die Figuren 2 und 4 zeigen schematisch eine Referenzelektrode 1 für potentiometrische Messungen. Zusätzlich zu den Schichten der Referenzelektroden 1 nach Figur 1 und 3 weisen die Referenzelektroden 1 nach Figur 2 und 4 noch eine Membran oder Deckschicht 13 auf, welche zwischen dem Analyten 6 und dem Bezugselektrolyten 5 angeordnet ist und diesen elektrisch isolierend und flüssigkeitsdicht von dem Analyten 6 abtrennt. Die Deckschicht 13 ist nur an einer relativ kleinen Stelle perforiert und an eben dieser Stelle durch ein Diaphragma 14 verschlossen. Das Diaphragma 14 ist für Flüssigkeiten durchlässig und gewährleistet somit den elektrolytischen Kontakt des das Anion der in der Schicht 4 vorhandenen Palladiumverbindung enthalten Bezugselektrolyts 5, der beispielsweise ein Gel oder eine Lösung sein kann, mit dem Analyten 5. Das Diaphragma kann zum Beispiel ein Keramikstift oder eine poröse Polymermembran sein.

Zusammenfassend ergibt sich somit eine Referenzelektrode 1 für elektrochemische Messungen, die ein metallisches Palladium enthaltendes Elektrodenteil 3 aufweist, das von einer Schicht 4 überdeckt ist, die aus einen in wäßrigen Medien schwerlöslichen Palladiumverbindung gemäß Anspruch 1 besteht oder diese enthält. Auf der Schicht 4 befindet sich ein Bezugselektrolyt 5, der Anionen dieser Palladiumverbindung in gelöster Form enthält.

## Patentansprüche

1. Referenzelektrode (1) für elektrochemische Messungen, **dadurch gekennzeichnet, daß** sie ein metallisches Palladium aufweisendes Elektrodenteil (3) hat, daß dieses Elektrodenteil (3) von einer Schicht (4) überdeckt ist, die in wäßrigen Medien schwerlösliches Palladiumjodid, Palladiumbromid und/oder Palladiumacetat enthält, und daß sich darüber ein Bezugselektrolyt (5) befindet, der Anionen dieser Palladiumverbindung oder Palladiumverbindungen in gelöster Form enthält.

2. Referenzelektrode nach Anspruch 1, **dadurch gekennzeichnet, daß** das Palladium-Elektrodenteil (3) als Schicht ausgebildet ist, die auf einem Substrat (2) aus einem Halbleitermaterial angeordnet ist, und daß das Elektrodenteil (3) insbesondere in einem halbleitertechnologischen Fertigungsprozeß auf das Substrat (2) aufgebracht ist.

3. Referenzelektrode nach Anspruch 1, **dadurch gekennzeichnet, daß** das Palladium-Elektrodenteil (3) als Schicht ausgebildet ist, die auf einem Substrat (2) aus Keramik, Glas, Glaskeramik, Leiterplattenmaterial, Polymerwerkstoff oder dergleichen dielektrischem Material besteht und die insbesondere mittels Dickschichttechnik auf das Substrat (2) aufgebracht ist.

4. Referenzelektrode nach den Anspruch 3, **dadurch gekennzeichnet, daß** das Elektrodenteil (3) metallisches Palladium enthält, das in feinvertellter Form in ein Bindemittel aus Polymermaterial oder Cermet eingebettet ist.

5. Referenzelektrode nach einem der Ansprüche 1 bis 4, **dadurch gekennzeichnet, daß** die das Palladiumjodid, Palladiumbromid und/oder Palladiumacetat aufweisende Schicht (4) elektrolytisch und/oder durch einen chemischen Ausfällungsprozeß in situ auf dem Palladium-Elektrodenteil (3) erzeugt ist.

6. Referenzelektrode nach einem der Ansprüche 1 bis 5, **dadurch gekennzeichnet, daß** Anionen des Palladiumjodids, Palladiumbromids und/oder Palladiumacetats der Schicht (4) in einer ionogenen Lösung und/oder einem verfestigten Gel enthalten sind.

7. Referenzelektrode nach einem der Ansprüche 1 bis 6, **dadurch gekennzeichnet, daß** sie auf einem Halbleiterchip oder in einem hybrid aufgebauten Mikrosystem integriert ist.

8. Referenzelektrode nach einem der Ansprüche 1 bis 7, **dadurch gekennzeichnet, daß** das Elektrodenteil (3) und/oder die Schicht (4) ring- oder scheibenförmig ausgebildet ist, oder eine rechteckige Gestalt aufweist.

9. Referenzelektrode nach einem der Ansprüche 1 bis 8, **dadurch gekennzeichnet, daß** sie. Teil eines elektrochemischen Meßsystems mit wenigstengs einer auf dem Substrat (2) befindlichen, insbesondere aus palladium bestehenden Arbeitselektrode (12) und/oder einem ionensensitiven Feldeffekttransistors ist, und daß die Arbeitselektrode (12) und/oder der Feldeffekttransistor vorzugsweise an der dem Palladium-Elektrodenteil (3) abgewandten Vorderseite des Substrats (2) angeordnet ist.

10. Referenzelektrode nach einem der Ansprüche 1 bis 9, **dadurch gekennzeichnet, daß** auf dem Substrat (2) wenigstens ein Temperatursensor angeordnet ist.

11. Referenzelektrode nach einem der Ansprüche 1 bis 10, **dadurch gekennzeichnet, daß** der die Anionen der Palladiumverbindung in gelöster Form enthaltende Bezugselektrolyt (5) mit einer nur an einer Stelle perforierten Membran oder Deckschicht (13) überzogen und eben diese Stelle mit einem für elektrochemische Messungen üblichen Diaphragma (14), zum Beispiel mittels einer porösen Membran oder einer Kationenaustauschermembran, geschlossen, jedoch für eine elektrolytische Verbindung durchgängig ist.

12. Verwendung einer Referenzelektrode nach einem der Ansprüche 1 bis 11 zur Festlegung eines Bezugspotentials in einem amperometrischen und/oder potentiometrischen Meßkreis.

## Claims

1. A reference electrode (1) for electrochemical measurements,
**characterised in that** it has an electrode component (3) comprising metallic palladium,
**in that** this electrode component (3) is covered by a layer (4) which contains palladium iodide, palladium bromide and/or palladium acetate that is poorly soluble in aqueous media,
**and in that** over it is positioned a reference electrolyte (5) containing anions of this palladium compound or these palladium compounds in dissolved form.

2. A reference electrode according to Claim 1,
**characterised in that** the palladium electrode component (3) is constructed as a layer which is disposed on a substrate (2) made from a semiconductor material,
and **in that** the electrode component (3) is applied to the substrate (2) using a production process from semiconductor technology in particular.

3. A reference electrode according to Claim 1,
**characterised in that** the palladium electrode component (3) is constructed as a layer which on a substrate (2) is made from ceramic material, glass, glass ceramic material, printed circuit board material, polymeric material or similar dielectric material and which is applied to the substrate (2) by means of thick-film technology in particular.

4. A reference electrode according to Claim 3,
**characterised in that** the electrode component (3) contains metallic palladium which is embedded in a finely distributed form into a binder made from polymer material or cermet.

5. A reference electrode according to one of Claims 1 to 4,
**characterised in that** the layer (4) comprising the palladium iodide, palladium bromide and/or palladium acetate is produced electrolytically and/or by a chemical precipitation process in situ on the palladium electrode component (3).

6. A reference electrode according to one of Claims 1 to 5,
**characterised in that** anions of the palladium iodide, palladium bromide and/or palladium acetate of the layer (4) are contained in an ionogenic solution and/or a solidified gel.

7. A reference electrode according to one of Claims 1 to 6,
**characterised in that** it is integrated on a semiconductor chip or in a hybrid-structured microsystem.

8. A reference electrode according to one of Claims 1 to 7,
**characterised in that** the electrode component (3) and/or the layer (4) has a ring-shaped or disk-shaped design or has as rectangular shape.

9. A reference electrode according to one of Claims 1 to 8,
**characterised in that** it is a part of an electrochemical measuring system having at least one working electrode (12) situated on the substrate (2) and made from palladium in particular and/or an ion-sensitive field-effect transistor, and **in that** the working electrode (12) and/or the field-effect transistor.is preferably disposed on the front side of the substrate (2) further from the palladium electrode component (3).

10. A reference electrode according to one of Claims 1 to 9,
**characterised in that** at least one temperature sensor is disposed on the substrate (2).

11. A reference electrode according to one of Claims 1 to 10,
**characterised in that** the reference electrolyte (5). containing the anions of the palladium compound in dissolved form is covered by a membrane or surface layer (13) perforated at only one point and this point is closed with a diaphragm (14) conventionally used for electrochemical measurements, for example by means of a porous membrane or a cation-exchanger membrane, but is permeable to an electrolytic compound.

12. Use of a reference electrode according to one of Claims 1 to 11 for establishing a reference potential in an amperometric and/or potentiometric measurement circuit.

## Revendications

1. Électrode de référence (1) pour mesure électrochimique, **caractérisée en ce qu'**
elle possède une partie d'électrode (3) présentant du palladium métallique, cette partie d'électrode (3) est recouverte d'une couche (4) qui contient de l'iodure de palladium, du bromure de palladium et/ou de l'acétate de palladium difficilement solubles dans des milieux aqueux et au-dessus de ceci se trouve un électrolyte de référence (5) qui contient en forme dissoute des anions de ce composé de palladium ou ces composés de palladium.

2. Électrode de référence selon la revendication 1,
**caractérisée en ce que**
la partie d'électrode en palladium (3) est constituée en tant que couche disposée sur un substrat (2) de matériau semi-conducteur, et la partie d'électrode (3) est déposée sur le substrat (2), en particulier par un processus de fabrication de la technologie des semi-conducteurs.

3. Électrode de référence selon la revendication 1,
**caractérisée en ce que**
la partie d'électrode en palladium (3) est constituée en tant que couche existant sur un substrat (2) de céramique, de verre, de vitrocérame, de matériaux de circuit imprimé, de matériau polymère ou d'un matériau diélectrique semblable et qui est déposée sur le substrat (2), en particulier au moyen de la technique en couche épaisse.

4. Électrode de référence selon la revendication 3,
**caractérisée en ce que**
la partie d'électrode (3) contient du palladium métallique qui est noyé sous forme finement répartie dans un liant de matériau de polymère ou de cermet.

5. Électrode de référence selon l'une quelconque des revendications 1 à 4,
**caractérisée en ce que**
la couche (4) présentant l'iodure de palladium, le bromure de palladium et/ou l'acétate de palladium est fabriquée électrolytiquement ou par un processus chimique de précipitation in situ sur la partie d'électrode en palladium (3).

6. Électrode de référence selon l'une quelconque des revendications 1 à 5,
**caractérisée en ce que**
des anions de l'iodure de palladium, le bromure de palladium et/ou l'acétate de palladium de la couche (4) sont contenus dans une solution ionogène et/ou un gel compacté.

7. Électrode de référence selon l'une quelconque des revendications 1 à 6,
**caractérisée en ce qu'**
elle est intégrée dans une puce de semi-conducteur ou dans un micro-système de fabrication hybride.

8. Électrode de référence selon l'une quelconque des revendications 1 à 7,
**caractérisée en ce que**
la partie d'électrode (3) et/ou la couche (4) sont en forme d'anneau ou de rondelle ou présentent une silhouette rectangulaire.

9. Électrode de référence selon l'une quelconque des revendications 1 à 8,
**caractérisée en ce qu'**
elle est une partie d'un système de mesure électrochimique comportant au moins une électrode de travail (12) se trouvant sur le substrat (2) et constituée en particulier de palladium, et/ou un transistor à effet de champ sensible aux ions, et l'électrode de travail (12) et/ou le transistor à effet de champ sont disposés de préférence sur le côté avant du substrat (2) détourné de la partie d'électrode en palladium (3).

10. Électrode de référence selon l'une quelconque des revendications 1 à 9,
**caractérisée en ce qu'**
au moins un détecteur de température est disposé sur le substrat (2).

11. Électrode de référence selon l'une quelconque des revendications 1 à 10,
**caractérisée en ce que**
l'électrolyte de référence (5) contenant sous forme dissoute les anions du composé de palladium est recouvert d'une membrane ou d'une couche de couverture (13) perforée uniquement en un endroit, et justement cet endroit est fermé par un diaphragme (14) usuel en mesure électrochimique, par exemple au moyen d'une membrane poreuse ou d'une membrane échangeuse de cations, mais laisse passer un composé électrolytique.

12. Utilisation d'une électrode de référence selon l'une quelconque des revendications 1 à 11, pour la définition d'un potentiel de référence dans un circuit de mesure ampéromètrique et/ou potentiométrique.
